# EUROPÄISCHE PATENTSCHRIFT

(11) **EP 1 610 134 B1**
(45) Veröffentlichungstag und Bekanntmachung des Hinweises auf die Patenterteilung: **29.03.2006**
(21) Anmeldenummer: 04291625.4
(22) Anmeldetag: 25.06.2004
(51) Int. Cl.: G01R 31/26, B60L 7/10, G08B 29/00

(54) **Gesteuerter Gleichrichter für LED-Signalgeber**
Controlled inverter for LED signalling device
Ondulateur controlé pour un élément LED de signalisation.

(43) Veröffentlichungstag der Anmeldung: 28.12.2005
(73) Patentinhaber: ALCATEL, 75008 Paris (FR)
(72) Erfinder: Klose, Bernd, 71679 Asperg (DE)
(74) Vertreter: Rausch, Gabriele

(56) Entgegenhaltungen:
- DD-A- 292 630
- DE-A- 4 204 910
- GB-A- 2 089 149
- US-B1- 6 342 791

## Beschreibung

### Hintergrund der Erfingung

Herkömmliche Signalgeber für Bahnsignale werden mit Wechselspannung betrieben, die von einem Stellwerk geliefert wird. Diese Art von Signalgebern wird mehr und mehr durch mit Gleichspannung betriebene LED-Signalgeber ersetzt. Für den Einsatz von LED-Signalgebern ist eine Gleichrichtung der vom Stellwerk gelieferten Wechselspannung notwendig, wobei Ausfälle der Gleichrichtung den Bahnbetrieb nicht gefährden dürfen.

In der Innenanlage des Stellwerks ist für jeden Stromkreis eines Signalgebers eine Überwachungseinrichtung für die Stärke des an den Signalgeber abgegebenen Wechselstroms vorhanden. Liegt dieser oberhalb einer Schaltschwelle, wird ein Leuchten des Signalgebers angenommen, liegt er unterhalb der Schaltschwelle wird angenommen, dass der Signalgeber nicht leuchtet.

Bei der Realisierung von Gleichrichterschaltungen mit Halbleiterdioden, z.B. mit Grätz-Brückengleichrichtern, würde der Kurzschluss einer Diode in der Überwachungseinrichtung der Stellwerksanlage weiterhin einen Stromfluss erzeugen, der oberhalb der Schaltschwelle liegt. Das Stellwerk würde den LED-Signalgeber daher als leuchtend erkennen, obwohl dieser nur mit verminderter Leistung betrieben wird oder dunkel ist. Dies ist bei Vorsichts- oder Haltbegriffen betriebsgefährdend.

### Stand der Technik

Um bei einem Kurzschluss einer Diode in einem Grätz-Brückengleichrichter den Strom unter die Schaltschwelle zu bringen, ist es bekannt, die Primärseite des Gleichrichters mit einem mechanischen Relais zu versehen, welches bei Feststellen einer Fehlfunktion des Gleichrichters geöffnet wird und den primärseitigen Strom unterbricht, sodass das Signal vom Stellwerk als dunkel erkannt wird. Mechanische Relais besitzen eine relativ hohe Ausfallwahrscheinlichkeit und reduzieren die Zuverlässigkeit des LED-Signalgebers erheblich.

### Aufgabe der Erfindung

Aufgabe der Erfindung ist es, eine Steuerschaltung bereitzustellen, welche einen gesteuerten Betrieb eines Gleichrichters insbesondere für einen LED-Signalgeber ermöglicht, sowie ein Verfahren zur Funktionsprüfung des Gleichrichters mit Hilfe der Steuerschaltung anzugeben.

### Gegenstand der Erfindung

Gelöst wird diese Aufgabe erfindungsgemäß durch eine Steuerschaltung zum Umwandeln einer primären Wechselspannung in eine sekundäre Gleichspannung mit einen Gleichrichter, mindestens einem primärseitig vorgesehenen Widerstand, der durch einen elektronischen Schalter in den Primärstromkreis zur Reduzierung des Primärstroms zuschaltbar ist, einem Strommesser zur Messung des Primärstroms und einer Steuereinheit zum Schalten des mindestens einen elektronischen Schalters in Abhängigkeit des vom Strommesser gemessenen Primärstroms.

Durch den Einsatz einer Steuerschaltung für den Gleichrichter wird eine Funktionsprüfung des Gleichrichters ermöglicht. Beim Feststellen einer Fehlfunktion des Gleichrichters wird der Widerstand durch die Steuereinheit in den Primärstromkreis zugeschaltet und der Primärstrom sinkt unter die Schaltschwelle der Überwachungseinrichtung in der Stellwerksanlage. Dadurch wird der Ausfall des Signalgebers in der Stellwerksanlage offenbart.

In einer vorteilhaften Ausführungsform umfasst der Gleichrichter einen Grätz-Brückengleichrichter mit mindestens vier Dioden, wobei der Widerstand und der elektronische Schalter parallel geschaltet sind. Der Grätz-Brückengleichrichter wandelt sowohl die positive als auch die negative Halbwelle der Wechselspannung in Gleichspannung um. Aufgrund der Parallelschaltung kann der Widerstand durch den elektronischen Schalter überbrückt werden und so eine Erhöhung des Stroms im Primärstromkreis erreichen.

In einer Weiterbildung umfasst der elektronische Schalter zwei Transistoren, um sowohl die positive als auch die negative Halbwelle des primären Wechselstroms zu schalten.

In einer bevorzugten Ausführungsform weist der Gleichrichter zwei Grätz-Brückengleichrichter mit jeweils vier zwischen primärseitigen und sekundärseitigen Polen des Gleichrichters angeordneten Dioden auf, wobei die Dioden des einen Grätz-Brückengleichrichters jeweils mit einem Widerstand in Reihe geschaltet sind und die Dioden des anderen Grätz-Brückengleichrichters jeweils mit einem elektronischer Schalter in Reihe geschaltet sind. Bei der Verwendung von zwei Grätz-Brückengleichrichtern kann der eine beim Einschaltvorgang und der andere beim Betrieb des LED-Signalgebers verwendet werden.

In einer vorteilhaften Weiterbildung ist zur Bestimmung der Phasenlage des Primärstroms die Steuereinheit über eine Messleitung mit dem Primärstromkreis verbunden. Hierdurch wird ein getakteter Betrieb des Gleichrichters ermöglicht.

In einer besonders bevorzugten Ausführungsform ist eine von der Steuereinheit gesteuerte, sekundärseitige elektronische Schaltvorrichtung zum Ein/Ausschalten des Sekundärstroms vorgesehen. Dadurch kann eine Last, wie z.B. der LED-Signalgeber, sekundärseitig abgeschaltet werden.

In einer besonders vorteilhaften Ausführungsform ist die Steuereinheit im Sekundärstromkreis des Gleichrichters angeordnet, und zur Stabilisierung der Versorgungsspannung der Steuereinheit ist ein Stabilisator in Reihe zur Steuereinheit geschaltet. Die Stromversorgung der Steuereinheit wird vom Gleichrichter zur Verfügung gestellt, sodass keine externe Stromversorgung notwendig ist.

Die Erfindung betrifft auch ein Verfahren zum Prüfen der Funktion des elektronischen Schalters und des Gleichrichters der oben beschriebenen Steuerschaltung. Zur Funktionsprüfung des elektronischen Schalters wird dieser in vorgegebenen Zeitabständen für die Dauer eines vorgegebenen Zeitintervalls betätigt, und, falls eine vorgegebene Schaltschwelle nicht unterschritten wird, der Sekundärstrom abgeschaltet und/oder der Primärstrom unter die Schaltschwelle abgesenkt. Wird beim Betätigen des Schalters eine Fehlfunktion detektiert, kann die Steuereinheit über diesen Schalter den Primärstrom nicht mehr absenken. Um den LED-Signalgeber abzuschalten, kann durch die Steuereinheit der Sekundärstrom abgeschaltet oder über einen gegebenenfalls vorhandenen weiteren Schalter der Primärstrom unter die Schaltschwelle gesenkt werden.

Zur Funktionsprüfung des Gleichrichters wird der Primärstrom gemessen, und, falls von der Steuereinheit eine Fehlfunktion des Gleichrichters detektiert wird, der Sekundärstrom abgeschaltet und/oder der Primärstrom unter eine vorgegebene Schaltschwelle abgesenkt. Eine Fehlfunktion des Gleichrichters kann z.B. darin bestehen, dass eine Diode hochohmig wird oder einen Kurzschluss erzeugt. Beide Fälle können durch die Messung des Primärstroms ermittelt werden, sodass auf den Fehler entsprechend reagiert werden kann.

Die Erfindung betrifft auch noch ein Verfahren zum Einschalten der oben beschriebenen Steuerschaltung, bei dem der Gleichrichter zunächst mit einem Primärstrom einer Stärke betrieben wird, die für den Betrieb der im Sekundärstromkreis angeordneten Steuereinheit ausreicht, aber unterhalb einer vorgegebenen Schaltschwelle liegt, und die Steuereinheit nach der Initialisierung den Widerstand vom Primärstromkreis trennt. Beim Einschaltvorgang wird die Steuereinheit aktiviert, bevor eine Spannung an den LED-Signalgeber geliefert wird. Die Steuereinheit kann daher zunächst die Funktionsfähigkeit des Gleichrichters prüfen und erst, wenn diese gewährleistet ist, die Spannungsversorgung für die Last aktivieren.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Zwei Ausführungsbeispiele sind in der schematischen Zeichnung dargestellt und werden in der nachfolgenden Beschreibung erläutert. Es zeigt:
- **Fig. 1**: eine erste Ausführungsform der erfindungsgemäßen Steuerschaltung mit einem Gleichrichter,
- **Fig. 2**: eine zweite Ausführungsform der erfindungsgemäßen Steuerschaltung mit einem getakteten Gleichrichter, und
- **Fig. 3a-d**: zwei Strom-Zeit- und zwei Spannungs-Zeit-Diagramme zur Darstellung des Prinzips der Funktionsprüfung der erfindungsgemäßen Steuerschaltung.

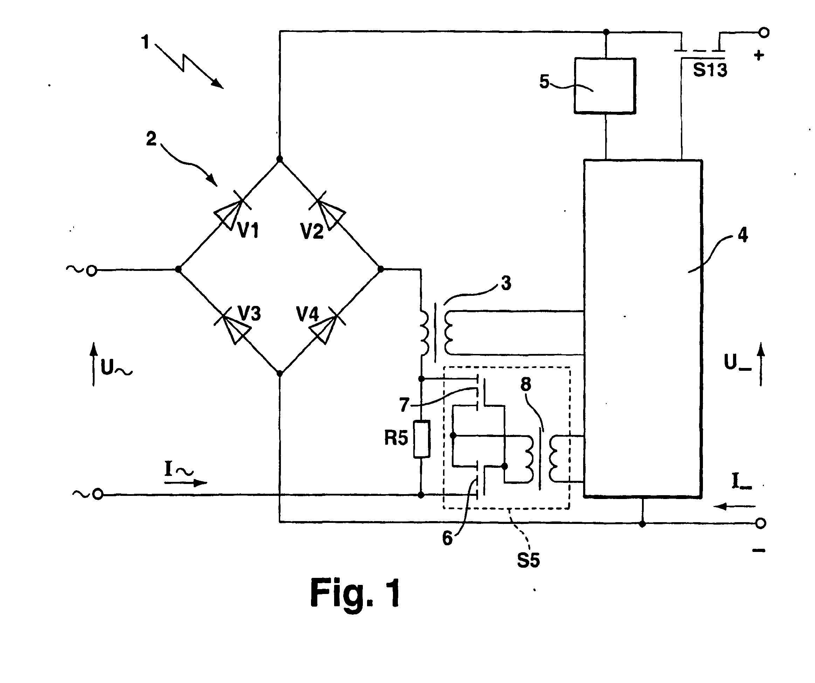

**Fig. 1** zeigt eine Steuerschaltung **1** mit einem Gleichrichter **2,** welcher vier Dioden **V1** bis **V4** umfasst, die so angeordnet sind, dass sie einen Grätz-Brückengleichrichter bilden. Die Steuerschaltung 1 dient der Umwandlung einer primärseitig von einem nicht bildlich dargestellten Stellwerk bereitgestellten Wechselspannung U_{~} in eine Gleichspannung U₋, welche zur Versorgung eines nicht bildlich dargestellten LED-Signalgebers dient. Der Primärstromkreis weist einen Widerstand **R5** auf, welcher einen Primärstrom I- des Primärstromkreises festlegt. Der Widerstand **R5** kann über einen parallel angeordneten elektronischen Schalter **S5** überbrückt werden. Ein Strommesser **3,** welcher durch einen Transformator gebildet wird, ist zur Messung des Primärstroms I_ im Primärstromkreis angeordnet und übermittelt den gemessenen Primärstrom an eine Steuereinheit **4**, welche durch einen Mikrocontroller gebildet wird. Die Steuereinheit **4** ist mit dem elektronischen Schalter S5 verbunden und ist so ausgelegt, dass sie den Schalter S5 in Abhängigkeit vom gemessenen Primärstrom I₋ schalten kann. Die Steuereinheit 4 ist im Sekundärstromkreis des Gleichrichters 2 angeordnet und nutzt die vom Gleichrichter zur Verfügung gestellte Spannung U₋ nach Umsetzung über einen Spannungsstabilisator 5 als Betriebsspannung.

Beim Einschaltvorgang der Steuerschaltung 1 wird vom Stellwerk die Primärspannung U_{~}, typischerweise zwischen 7 und 12 V, zur Verfügung gestellt. Die Steuereinheit 4 wird über den Gleichrichter 2 mit einer vom Spannungsstabilisator 5 auf 3,3 V abgeregelten Gleichspannung versorgt. Die Steuereinheit 4 prüft, ob der Gleichrichter 2 korrekt arbeitet, und schließt dann den elektronischen Schalter S5, um den Primärstrom I_{~} über eine Schaltschwelle Iₛ zu heben, bei der das Stellwerk den LED-Signalgeber bzw. die LED als leuchtend erkennt. Gleichzeitig aktiviert die Steuereinheit 4 eine durch einen MOSFET-Transistor gebildete elektronische Schaltvorrichtung **S13**, welche einen Sekundärstrom I₋ für den LED-Signalgeber einschaltet, sodass dieser zum Leuchten gebracht wird.

Während des Betriebs des LED-Signalgebers prüft die Steuereinheit 4 die Funktion des Gleichrichters 2. Falls dieser nicht korrekt arbeitet, wird der Schalter S5 geöffnet und der Primärstrom I_{~} fällt unter die Schaltschwelle Iₛ, wodurch dem Stellwerk angezeigt wird, dass der LED-Signalgeber bzw. die LED sich in einem nicht leuchtenden Zustand befindet. Gleichzeitig wird die Funktion des elektronischen Schalters S5 überprüft, indem dieser kurzzeitig geöffnet und geprüft wird, ob ein Absinken des Primärstroms I_{~} unter die Schaltschwelle Iₛ stattfindet. Ist dies nicht der Fall, wird der Sekundärstrom I₋durch die elektronische Schaltvorrichtung S13 abgeschaltet.

Der elektronische Schalter S5 wird durch zwei V-MOS-Transistoren **6**, **7** und einen Transformator **8** gebildet. Die Transistoren 6, 7 sind so geschaltet, dass sowohl bei der positiven als auch bei der negativen Halbwelle des Primärstroms I_{~} der Widerstand R5 überbrückt werden kann. Vorteilhaft an der Verwendung eines einzigen elektronischen Schalters S5 ist die einfache Ansteuerung durch die Steuereinheit **4**.

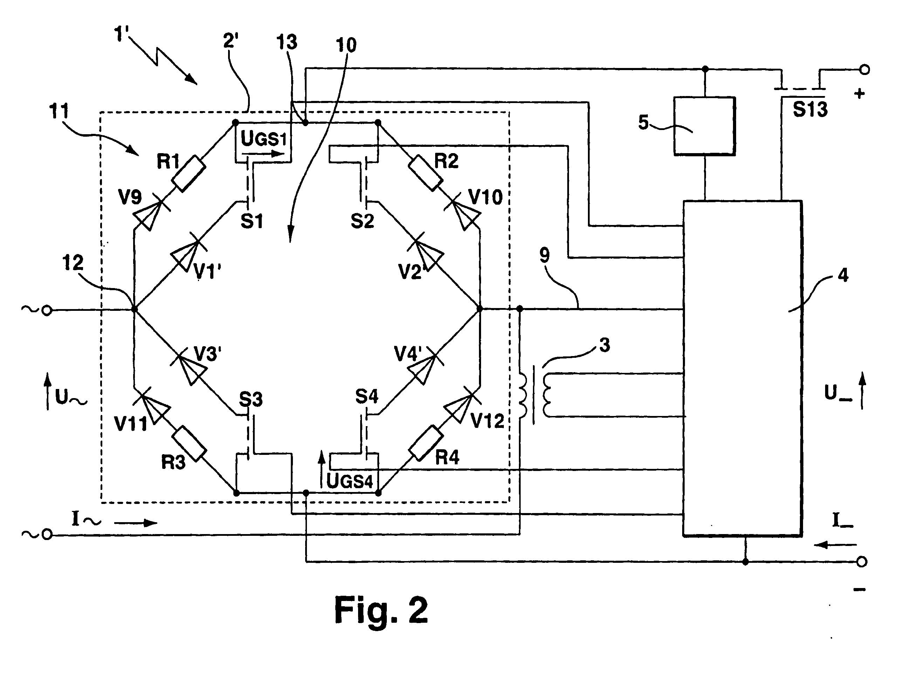

**Fig. 2** zeigt eine Steuerschaltung **1**', welche sich von der Steuerschaltung **1** von Fig. 1 im Wesentlichen durch einen Gleichrichter 2' mit gegenüber dem Gleichrichter 2 von Fig. 1 veränderten Aufbau unterscheidet. Der Gleichrichter 2' weist einen ersten Grätz-Brückengleichrichter **10** mit vier Dioden **V1'** bis **V4'** und vier elektronischen Schaltern **S1** bis **S4** sowie einen zweiten Grätz-Brückengleichrichter **11** mit vier Dioden **V9** bis **V12** und vier Widerständen **R1** bis **R4** auf.

Zwischen einem primärseitigen Pol **12** und einem sekundärseitigen Pol **13** des Gleichrichters 2' sind der elektronische Schalter S1 und die Diode V1' des ersten Grätz-Brückengleichrichters 10 in Reihe geschaltet. Parallel dazu sind zwischen den primärseitigen Pol 12 und den sekundärseitigen Pol 13 die Diode V9 und der Widerstand R1 des zweiten Grätz-Brückengleichrichters 11 in Reihe geschaltet. Die weiteren Dioden V2' bis V4' und V10 bis V12, die Widerstände R1 bis R4 und die Schalter S2 bis S4 der beiden Grätz-Brückengleichrichter 10, 11 sind in einer analogen Anordnung zwischen den Polen des Gleichrichters 2' positioniert. Der Gleichrichter 2' kann von der Steuereinheit 4 über eine Messleitung **9** getaktet werden, indem die vier elektronischen Schalter S1 bis S4 abwechselnd geschaltet werden.

Nach dem Anlegen der Primärspannung U_{~} wird durch den zweiten Grätz-Brückengleichrichter 11 die Versorgungsspannung der Steuereinheit 4 erzeugt. Die Steuereinheit 4 beginnt nach der Initialisierung abhängig von der detektierten Phasenlage die elektronischen Schalter S1 bis S4 zu steuern. Mit S13 wird nun die Last (der LED-Signalgeber) zugeschaltet. Zum Betrieb des LED-Signalgebers wird der erste Grätz-Brückengleichrichter 10 verwendet, da dieser eine höhere Sekundärspannung U₋ liefert als der zweite Grätz-Brückengleichrichter 11.

Für die elektronischen Schalter S1 bis S4 werden im vorliegenden Fall MOSFETs verwendet, es können aber auch Bipolartransistoren oder Thyristoren eingesetzt werden. Die Prüfung der Funktion des Gleichrichters 2' erfolgt analog zu der Prüfung des Gleichrichters 2 von Fig. 1.

Die Prüfung der elektronischen Schalter S1 bis S4 erfolgt in einem Prüfzyklus durch kurzzeitiges Öffnen der elektronischen Schalter S1 bis S4. Über den Strommesser 3 kann der Primärstrom I₋ detektiert und daraus auf eine Fehlfunktion des Gleichrichters geschlossen werden.

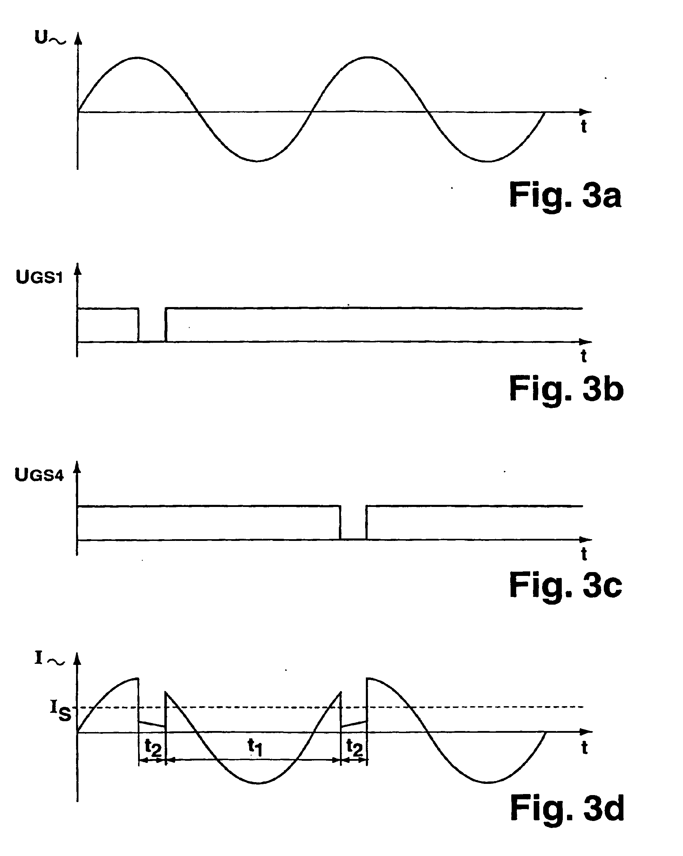

Dieser Vorgang ist in **Fig. 3** dargestellt. Hierzu zeigt Fig. 3**a** die sinusförmige Primärspannung U_{~} , welche vom Stellwerk geliefert wird. Fig. 3**b** bzw. Fig. 3**c** zeigt die Gate-Source-Spannung U_{GS1} bzw. U_{GS4} des elektronischen Schalters S1 bzw. S4. Zur Funktionsprüfung des elektronischen Schalters S1 wird dieser geschlossen, indem die Spannung U_{GS1} für die Dauer eines Zeitintervalls t₂ von der Steuereinheit 4 von einer konstanten Spannung von ca. 3 -10 V auf 0 V abgesenkt wird. Hierdurch fällt bei funktionsfähigem Schalter S1 der in Fig. 3d gezeigte Primärstrom I_{~} unter die Schaltschwelle Iₛ ab, da der Widerstand R1 in dem Primärstromkreis zugeschaltet wird. Auf dieselbe Weise wird die Funktionsfähigkeit des Schalters S4 geprüft. Zwischen dem Prüfintervall für den Schalter S1 und dem Prüfintervall für den Schalter S4 liegt ein Zeitintervall t₁, während dem der LED-Signalgeber mit maximaler Leistung betrieben wird. Das Verhältnis vom Zeitintervall t₁ zum Zeitintervall t₂ ist in der Praxis wesentlich größer als in Fig. 3 dargestellt. Auch sollte die Dauer des Zeitintervalls t₂ möglichst klein sein, damit das kurzzeitige Absenken des Primärstroms I_{~} unter die Schaltschwelle Iₛ vom Stellwerk nicht registriert wird und die Last mit maximaler Leistung betrieben wird. Durch die Verwendung von elektronischen Schaltern, welche im Gegensatz zu mechanischen Schaltern fast instantan schalten, wird die Länge des Zeitintervalls t₂ nur durch die Grenzfrequenz des Strommessers 3 limitiert.

Beim Auftreten eines Gleichrichterausfalls wird die Taktung abgeschaltet, und die elektronischen Schalter S1 bis S4 öffnen. Über den ersten Grätz-Brückengleichrichter 10 sind immer zwei der elektronischen Schalter S1 bis S4 in Reihe geschaltet. Beim Kurzschluss in einem der elektronischen Schalter S1 bis S4 oder in einer der Dioden V1' bis V4' kann immer einer der Schalter S1 bis S4 geöffnet werden. Die Widerstände R1 bis R4 stellen sicher, dass in jedem Fehlerfall der Eingangsstrom auf einen Wert unterhalb der Schaltschwelle Iₛ der Überwachungseinrichtung in der Stellwerksanlage abgesenkt wird.

Bei Ausfall des Gleichrichters 2' durch Kurzschluss einer der Dioden V1' bis V4' kann außerdem festgestellt werden, in welcher der Dioden V1' bis V4' der Kurzschluss aufgetreten ist. Nimmt man z.B. an, der Kurzschluss sei in Diode V2' aufgetreten, so fließt ein großer Strom durch den Gleichrichter 2', falls die Diode V1' leitend ist. Durch Öffnen des elektronischen Schalters S1 kann daher festgestellt werden, dass der Kurzschluss an der Diode V2' aufgetreten ist.

## Patentansprüche

1. Steuerschaltung (1; 1') zum Umwandeln einer primären Wechselspannung (U_{~}) in eine sekundäre Gleichspannung (U₋), umfassend:
einen Gleichrichter (2; 2') und einen Strommesser (3) zur Messung des Primärstroms (I_{~});
wobei mindestens einen primärseitig vorgesehenen Widerstand (R1 bis R5), der durch einen elektronischen Schalter (S1 bis S5) in den Primärstromkreis zur Reduzierung des Primärstroms (I_{~}) zuschaltbar ist,
wobei der Widerstand (R1 bis R5) und der elektronische Schalter (S1 bis S5) parallel geschaltet sind; und
eine Steuereinheit (4) zum Schalten des mindestens einen elektronischen Schalters (S1 bis S5) in Abhängigkeit des vom Strommesser (3) gemessenen Primärstroms (I_{~}).

2. Steuerschaltung nach Anspruch 1, **dadurch gekennzeichnet, dass** der Gleichrichter (2; 2') einen Grätz-Brückengleichrichter (10, 11) mit mindestens vier Dioden (V1 bis V4; V1' bis V4', V9 bis V12) umfasst.

3. Steuerschaltung nach Anspruch 2, **dadurch gekennzeichnet, dass** der elektronische Schalter (S5) zwei Transistoren (6, 7) umfasst.

4. Steuerschaltung nach Anspruch 1, **dadurch gekennzeichnet, dass** der Gleichrichter (2') zwei Grätz-Brückengleichrichter (10, 11) mit jeweils vier zwischen primärseitigen und sekundärseitigen Polen (12, 13) des Gleichrichters (2') angeordneten Dioden (V1' bis V4', V9 bis V12) aufweist, wobei die Dioden (V9 bis V12) des einen Grätz-Brückengleichrichters (11) jeweils mit einem Widerstand (R1 bis R4) in Reihe geschaltet sind und die Dioden (V1' bis V4') des anderen Grätz-Brückengleichrichters (10) jeweils mit einem elektronischer Schalter (S1 bis S4) in Reihe geschaltet sind.

5. Steuerschaltung nach Anspruch 4, **dadurch gekennzeichnet, dass** zur Bestimmung der Phasenlage des Primärstroms (I_{~}) die Steuereinheit (4) über eine Messleitung (9) mit dem Primärstromkreis verbunden ist.

6. Steuerschaltung nach Anspruch 1, **dadurch gekennzeichnet, dass** eine von der Steuereinheit (4) gesteuerte, sekundärseitige elektronische Schaltvorrichtung (S13) zum Ein/Ausschalten des Sekundärstroms (I₋) vorgesehen ist.

7. Steuerschaltung nach Anspruch 1, **dadurch gekennzeichnet, dass** die Steuereinheit (4) im Sekundärstromkreis des Gleichrichters (2; 2') angeordnet ist, und dass zur Stabilisierung der Versorgungsspannung der Steuereinheit (4) ein Stabilisator (5) in Reihe zur Steuereinheit (4) geschaltet ist.

8. Verfahren zum Prüfen der Funktion des mindestens einen elektronischen Schalters (S1 bis S5) der Steuerschaltung (1; 1') nach Anspruch 1, bei dem der elektronische Schalter (S1 bis S5) in vorgegebenen Zeitabständen (t₁) für die Dauer eines vorgegebenen Zeitintervalls (t₂) betätigt wird, und, falls eine vorgegebene Schaltschwelle (Iₛ) nicht unterschritten wird, der Sekundärstrom (I₋) abgeschaltet und/oder der Primärstrom (I_{~}) unter die Schaltschwelle (Iₛ) abgesenkt wird.

9. Verfahren nach Anspruch 8, bei dem der Primärstrom (I_{~}) gemessen wird, und, falls von der Steuereinheit (4) eine Fehlfunktion des Gleichrichters (2; 2') detektiert wird, der Sekundärstrom (I₋) abgeschaltet und/oder der Primärstrom (I_{~}) unter eine vorgegebene Schaltschwelle (Iₛ) abgesenkt wird.

10. Verfahren nach Anspruch 8, bei dem zum Einschalten der Steuerschaltung der Gleichrichter (2; 2') zunächst mit einem Primärstrom (I-) einer Stärke betrieben wird, die für den Betrieb der im Sekundärstromkreis angeordneten Steuereinheit (4) ausreicht, aber unterhalb einer vorgegebenen Schaltschwelle (Iₛ) liegt, und die Steuereinheit (4) nach der Initialisierung den mindestens einen Widerstand (R1 bis R5) vom Primärstromkreis trennt.

## Claims

1. Control circuit (1; 1') for converting a primary a.c. voltage (U~) into a secondary d.c. voltage (U_), comprising:
a rectifier (2; 2'), and an ammeter (3) for measuring the primary current (I~);
wherein there is provided at least one resistor (R1 to R5), which is provided on the primary side and can be connected into the primary circuit, through an electronic switch (S1 to S5), in order to reduce the primary current (I~),
the resistor (R1 to R5) and the electronic switch (S1 to S5) being connected in parallel; and
there is provided a control unit (4) for switching the at least one electronic switch (S1 to S5) in dependence on the primary current (I~) measured by the ammeter (3).

2. Control circuit according to claim 1, **characterized in that** the rectifier (2; 2') comprises a Grätz bridge rectifier (10, 11) having at least four diodes (V1 to V4; V1' to V4', V9 to V12).

3. control circuit according to claim 2, **characterized in that** the electronic switch (S5) comprises two transistors (6, 7).

4. control circuit according to claim 1, **characterized in that** the rectifier (2') has two Gratz bridge rectifiers (10, 11), each having four diodes (V1' to V4', V9 to V12) disposed between primary-side and secondary-side poles (12, 13) of the rectifier (2'), the diodes (V9 to V12) of the one Grätz bridge rectifier (11) being respectively connected in series to a resistor (R1 to R4), and the diodes (V1' to V4') of the other Grätz bridge rectifier (10) being respectively connected in series to an electronic switch (51 to S4).

5. Control circuit according to claim 4, **characterized in that**, for the purpose of determining the phase position of the primary current (I-), the control unit (4) is connected to the primary circuit via a measuring line (9).

6. Control circuit according to claim 1, **characterized in that** a secondary-side electronic switching device (S13), which is controlled by the control unit (S4), is provided for the purpose of switching on/off the secondary current (I_).

7. Control circuit according to claim 1, **characterized in that** the control unit (4) is disposed in the secondary circuit of the rectifier (2; 2'), and a stabilizer (5) is connected in series relative to the control unit (4) in order to stabilize the supply voltage of the control unit (4).

8. Method for testing the functioning of the at least one electronic switch (S1 to S5) of the control circuit (1; 1') according to claim 1, in which the electronic switch (S1 to S5) is actuated, at predefined time intervals (t₁), for the duration of a predefined time interval (t₂) and, if the current is not below a predefined switching threshold (Iₛ), the secondary current (I_) is switched off and/or the primary current (I~) is reduced below the switching threshold (Iₛ).

9. Method according to claim 8, in which the primary current (I~) is measured and, if a malfunction of the rectifier (2; 2') is detected by the control unit (4), the secondary current (I_) is switched off and/or the primary current (I―) is reduced below a predefined switching threshold (Iₛ).

10. Method according to claim 8, in which, for the purpose of switching on the control circuit, the rectifier (2; 2') is first operated with a primary current (I~) of a strength which is sufficient for operation of the control unit (4) disposed in the secondary circuit, but which is below a predefined switching threshold (Iₛ), and the control unit (4) isolates the at least one resistor (R1 to R5) from the primary circuit following the initialization.

## Revendications

1. Circuit de commande (1; 1') pour convertir une tension alternative primaire (U~) en une tension continue secondaire (U_), comprenant : un redresseur (2 ; 2') et un mesureur de courant (3) pour mesurer le courant primaire (I~); au moins une résistance (R1 à R5) prévue du côté primaire pouvant être connectée dans le circuit du courant primaire par un commutateur électronique (S1 à S5) pour réduire le courant primaire (I~), la résistance (R1 à R5) et le commutateur électronique (S1 à S5) étant branchés en parallèle; et une unité de commande (4) pour commuter l'au moins un commutateur électronique (S1 à S5) en fonction du courant primaire (I~) mesuré par les mesureur de courant (3).

2. Circuit de commande selon la revendication 1, **caractérisé en ce que** le redresseur (2, ; 2') comprend un redresseur en pont de Graetz (10, 11) avec au moins quatre diodes (V1 à V4 ; V1' à V4', V9 à V12).

3. Circuit de commande selon la revendication 2, **caractérisé en ce que** le commutateur électronique (S5) comprend deux transistors (6, 7).

4. Circuit de commande selon la revendication 1, **caractérisé en ce que** le redresseur (2') présente deux redresseurs en pont de Graetz (10, 11) avec chacun quatre diodes (V1' à V4', V9 à V12) disposées entre les bornes côté primaire et côté secondaire (12, 13) du redresseur (2'), les diodes (V9 à V12) de l'un des redresseurs en pont de Graetz (11) étant à chaque fois branchées en série avec une résistance (R1 à R4) et les diodes (V1' à V4') de l'autre redresseur en pont de Graetz (10) étant à chaque fois branchées en série avec un commutateur électronique (S1 à S4).

5. Circuit de commande selon la revendication 4, **caractérisé en ce que** pour déterminer la phase du courant primaire (I~), l'unité de commande (4) est reliée au circuit du courant primaire par le biais d'une ligne de mesure (9).

6. Circuit de commande selon la revendication 1, **caractérisé en ce qu'**il est prévu un dispositif de commutation électronique (S13) du côté secondaire commandé par l'unité de commande (4) pour activer/désactiver le courant secondaire (I_).

7. Circuit de commande selon la revendication 1, **caractérisé en ce que** l'unité de commande (4) est disposée dans le circuit du courant secondaire du redresseur (2 ; 2') et un stabilisateur (5) est branché en série avec l'unité de commande (4) pour stabiliser la tension d'alimentation de celle-ci (4).

8. Procédé pour contrôler le fonctionnement de l'au moins un commutateur électronique (S1 à S5) du circuit de commande (1 ; 1') selon la revendication 1, avec lequel le commutateur électronique (S1 à S5) est actionné à des intervalles de temps prédéfinis (t₁) pendant la durée d'un intervalle de temps prédéfini (t₂) et, si le courant n'est pas inférieur à un seuil de commutation prédéfini (Iₛ), le courant secondaire (I) est désactivé et/ou le courant primaire (I~) est abaissé au-dessous du seuil de commutation (Iₛ).

9. Procédé selon la revendication 8, avec lequel le courant primaire (I~) est mesuré et, si l'unité de commande (4) détecte un défaut de fonctionnement du redresseur (2, 2'), le courant secondaire (I_) est désactivé et/ou le courant primaire (I~) est abaissé au-dessous d'un seuil de commutation prédéfini (Iₛ).

10. Procédé selon la revendication 8, avec lequel, pour la mise en marche du circuit de commande, le redresseur (2 ; 2') fonctionne tout d'abord avec un courant primaire (I~) dont l'intensité est suffisante pour le fonctionnement de l'unité de commande (4) disposée dans le circuit du courant secondaire, mais inférieure à un seuil de commutation prédéfini (Iₛ), et l'unité de commande (4) déconnecte l'au moins une résistance (R1 à R5) du circuit du courant primaire après l'initialisation.
